# EUROPEAN PATENT APPLICATION

(11) **EP 2 163 812 A2**
(43) Date of publication of application: **17.03.2010**
(21) Application number: 09380150.4
(22) Date of filing: 04.09.2009
(51) Int. Cl.: F21S 8/08, F21V 23/04, H05B 37/02, F21S 8/00, F21W 131/103

(54) **Control system for multiple luminaire electrical installations**

(30) Priority: 12.09.2008 ES 200802601
(71) Applicant: Barbolight, S.L., 31192 Mutiliva Baja Navarra (ES)
(72) Inventor: Lopez Barbarin, Javier, 31192 Mutilva Baja (Navarra) (ES)
(74) Representative: Ungria Lopez, Javier

(57) **Abstract**

Control system for multiple luminaire electrical installations, of special use for the control of electrical installations for nocturnal illumination of public places, which comprises a control center, provided with the corresponding microprocessor, connected to the luminaires to be controlled, which in turn incorporate a movement detector sensor, the corresponding lamp and luminaire-luminaire communication means, in such a way that the lighting of the nocturnal illumination lamps will be activated only when movement is detected, i.e., when a person or vehicle passes through the place, triggering the lighting of a sector of luminaires, covering a forward and a rear area which gives the sensation that the entire installation is lit, and as the person/s or vehicle/s move forward, successive sectors of luminaires will light up, being able to be adapted to the number, speed, frequency, etc., of the same and with the successive switching off of sectors of luminaires taking place with a predetermined delay when the zone has ceased to be transited.

## Description

### Object of the invention

As stated in the title of this descriptive specification, the following invention refers to a control system for multiple luminaire electrical installations, being of special use for the control of electrical installations for nocturnal illumination of public places, having the aim of activating the lighting of nocturnal illumination lamps only when detecting the presence of movement, i.e., when a person or vehicle passes through the place.

That way, when some movement is detected, the lighting of a sector of luminaires takes place, covering a forward and a rear area which gives the sensation that the entire installation is lit, in such a way that as the person/s or vehicle/s move forward, successive sectors of luminaires light up, being able to be adapted to the number, speed, frequency, etc., of the same.

Afterwards, with a predetermined delay of time, the successive switching off of the sectors of luminaires will take place, so that the movement has ceased.

In this way, the lamps will only light up when necessary, permitting a considerable economic saving since at night the illumination remains lit during a long period of time even when there is no person present.

### Field of application

The present specification describes a control system for multiple luminaire electrical installations having special application in all those electrical installations for public nocturnal illumination, such as streets, squares, industrial estates, parks, crossroads, public bodies, etc.

Moreover, the proposed control system is also of application in electrical installations for private nocturnal illumination, such as department stores, hypermarkets etc., where there are large outside spaces such as car parks, which are permanently lit.

### Background of the invention

As is known, all roads in towns and villages provided with an electrical installation for nocturnal lighting are lit for nocturnal illumination and remain functioning during all the predetermined hours in which it is switched on, independently of the passage or persons and/or vehicles with the high economic cost that this entails.

In this way, there are many hours in which the electrical installation is "on" without any need since there are no persons or vehicles present in the street.

Therefore, taking into account the numerous public electrical installations in roads and other places, it is easy to imagine the large number of hours in which the public illumination is switched on without the presence of vehicles and/or persons.

Thus, it can be considered that 2% of the national electrical consumption corresponds to urban and interurban illumination systems.

During a very high proportion of the predetermined time for being switched on, these illumination systems are projecting light onto deserted areas, in other words, there are no persons or vehicles benefiting from the illumination.

So, in certain roads or zones that are frequently transited it could perhaps be considered that there is movement of persons or vehicles all night but, in common circumstances, most of them will not need continual illumination.

### Description of the invention

The present specification describes a control system for multiple luminaire electrical installations, being of special use for the control of electrical installations for nocturnal illumination of public and private places, in such a way that the system comprises a control center, provided with a microprocessor, connected to the luminaires to be controlled, the luminaires in turn incorporating a movement detector sensor and luminaire-luminaire communication means, the corresponding lamps being switched on by sectors along the electrical installation, while after a predetermined length of time without detecting any movement, with the displacement along the installation, it will be communicated to the preceding sectors of luminaires their progressive switching off after a predetermined time.

When someone moves forward along a road and approaches a crossing, a communication takes place causing the switching on of a series of sectors of luminaires of all the roads meeting at the crossing.

The luminaire-luminaire communication can be based on ultrasound, on an electromagnetic transmission, etc.

Moreover, when arriving at a crossing and entering into one of the roads that converge, just the luminaires of that road will successively switch on, by sectors, being the sectors of luminaires of the other roads switched off after a predetermined length of time.

Also, the luminaire-luminaire communication system permits communication from any luminaire of the installation to any other luminaire, making it possible to control the displacements, speed and type of the same.

In this way, the detector sensors mounted in the luminaires can collect and transmit information to the microprocessor of the control center, permitting the reception and transmission of data, such as a "neuronal" system.

The system is of special application when the luminaires incorporate LED emitters without any delay in the switching on and with multiple light levels.

In short, the control system that is proposed, as with a neuronal network, permits each luminaire to take very simple decisions and at the same time the communication among the entire array allows the whole system to behave in an intelligent way, adapting the illumination to the needs of the area, town, village, industrial estate, etc.

In order to complement the description that follows, and with the aim of facilitating a better understanding of the characteristics of this invention, this specification is accompanied by a set of plans containing figures in which, on an illustrative rather than limiting basis, show the most characteristic details of the invention.

### Brief description of the designs

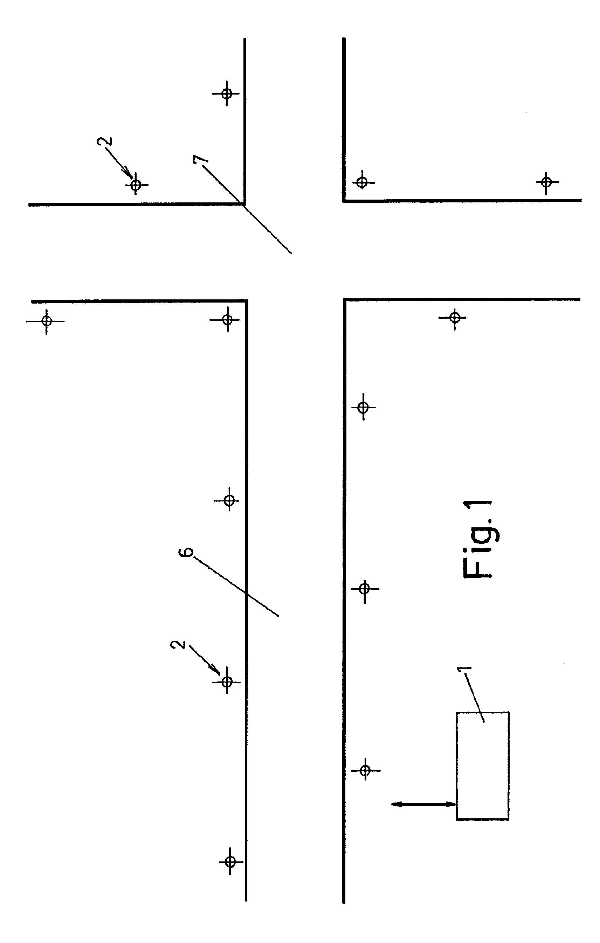

Figure 1. Shows a schematic view of a multiple luminaire installation, in which the luminaires contain a movement detector sensor and at the same time comprise means of luminaire-luminaire communication and are connected to a microprocessor.

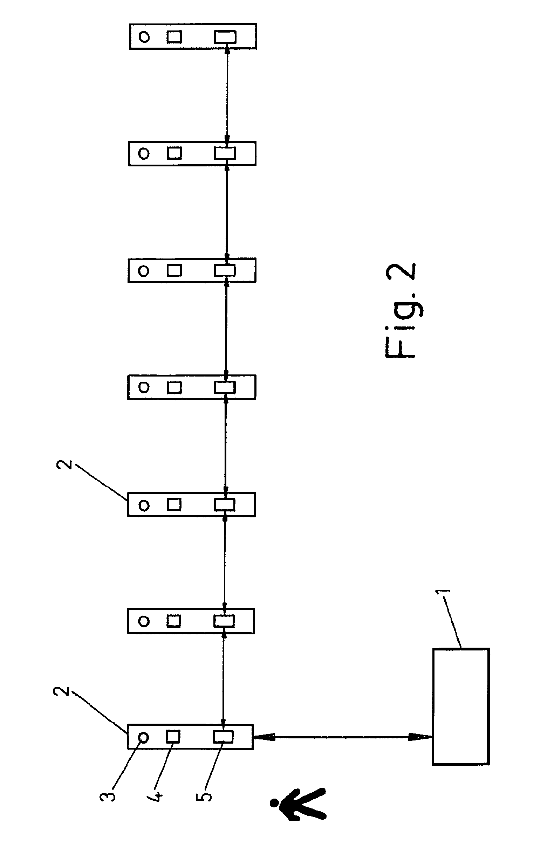

Figure 2. Shows a schematic view of the communication among luminaires.

### Description of a preferred embodiment

In view of the commented figures and in accordance with the adopted numbering, it can be observed how the system comprises a control center 1, endowed with the appropriate microprocessor, connected to the luminaires 2 to be controlled, for example by means of a cable, the luminaires 2 incorporating a movement detector sensor 3, the corresponding lamp 4 and means of luminaire-luminaire communication 5.

So, when a sensor 3 detects movement, the microprocessor will activate the switching on of a sector of luminaires 2 covering a forward-rear area, which gives the sensation of the entire installation being lit, in such a way that with the displacement along the electrical installation the detection of the movement by the sensors 3 of the successive luminaires will cause the microprocessor to activate the switching on of successive sectors of luminaires 2 and, at the same time, it will be communicated from the microprocessor of the control center 1 to the sectors of the preceding luminaires their progressive switching off after a predetermined length of time.

In short, when a sensor 3 detects movement due to the presence of a vehicle and/or pedestrian, the microprocessor will activate the switching on of sectors of luminaires relating to a forward-rear area of influence, which gives the sensation of the entire installation being lit and as progress is made along the road 6 sectors of luminaires 2 will be activated, being able to be adapted to the number, speed and frequency of the displacements.

Moreover, the luminaire-luminaire communication can be carried out by different means and can thus be based on ultrasound, electromagnetic transmission or others (radio, visible light, invisible light, etc.).

In this way, as with a neuronal network, each luminaire can take very simple decisions but the communication among the entire array allows the whole system to behave in an intelligent way, adapting the illumination to the needs of the area, road, industrial estate, village, town, etc.

In the vicinity of a crossing 7, the microprocessor will activate the switching on of sectors of luminaires 2 for all the roads meeting at the crossing, in such a way that when entering into one of those roads, just the sectors of luminaires of that road will continue to be switched on, while the sectors of luminaires of the other roads will be switched off after a predetermined period of time, having always the feeling that the entire electrical installation is switched on.

To achieve this, the microprocessor comprises a location network, for example in an abscissa-ordinate positioning, of all the luminaires, permitting the switching on of the luminaires according to sectors depending on their area of influence in order to give the sensation that the entire installation is lit.

So, if a passer-by accesses a road a sector of luminaires will be switched on on both sides of the access point so that the sensation is that the entire installation is switched on. When moving in a certain direction the sectors of luminaires will switch on in order to maintain the sensation of the entire installation being lit.

In this way, the luminaire-luminaire communication means 5 of the system permit communication with the microprocessor of the control center 1 from any luminaire 2 of the installation and to any other luminaire.

Moreover, with this it is possible for the detector sensors 3 mounted in the luminaires 2 to collect and transmit information to the microprocessor of the control center 1 from where the pertinent operations taking place, applying the programming logic.

So, the luminaire-luminaire communication system permits communication from any point (luminaire) of the electrical installation to any other point, permitting a control of the displacements, speed and type of the same.

The possibilities of data reception and transmission are extremely broad. Any sensor will be able to use this neuronal system for the transmission of data.

The system that is described is of special utility for those luminaires 2 that incorporate LED emitters without delay in the switching on and with multiple light levels.

By means of the application of the described control system in electrical installations for nocturnal illumination, a considerable economic saving is achieved since the illumination will only be switched on when necessary.

The most important advantages of the described control system are the following:
- Reduction in electricity consumption.
- More feasible possibility of having autonomous systems (not connected to the electricity grid) in remote sites.
- Longer life of the illumination systems due to having less use.
- Savings in maintenance.
- Reduction in the level of light pollution.
- Possibility of data collection.
- Possibility of data transmission.

## Claims

1. CONTROL SYSTEM FOR MULTIPLE LUMINAIRE ELECTRICAL INSTALLATIONS, being of special use for the control of electrical installations for nocturnal illumination of public and private places, **characterized in that** the system comprises a control center (1), provided with the corresponding microprocessor, connected to the luminaires (2) to be controlled, the luminaires (2) incorporating a movement detector sensor (3), the corresponding lamp (4) and luminaire-luminaire communication means (5), in such a way that with the displacement along the installation, when moving through it, the detection of the movement by the sensors (3) of the successive luminaires (2) triggers the activation of sectors of luminaires (2) by the microprocessor of the control center (1), while with the displacement along the installation the lamps of the preceding sectors of luminaires (2) will be switched off by means of a communication from the microprocessor after a predetermined length of time.

2. CONTROL SYSTEM FOR MULTIPLE LUMINAIRE ELECTRICAL INSTALLATIONS, according to claim 1, **characterized in that** in the vicinity of a crossing (7) an activation is produced by the microprocessor of the control center (1) of the lamps (4) of the neighboring sectors of luminaires (2) of all the roads meeting at the crossing.

3. CONTROL SYSTEM FOR MULTIPLE LUMINAIRE ELECTRICAL INSTALLATIONS, according to claims 1 and 2, **characterized in that** when entering one of the roads, the microprocessor of the control center (1) will only activate the successive sectors of luminaires (2) of that road when the sensors (3) of those luminaires detect movement.

4. CONTROL SYSTEM FOR MULTIPLE LUMINAIRE ELECTRICAL INSTALLATIONS, according to claim 1, **characterized in that** the luminaire-luminaire communication means (5) permit communication with the microprocessor of the control center (1) from any luminaire (2) of the installation to any other luminaire.

5. CONTROL SYSTEM FOR MULTIPLE LUMINAIRE ELECTRICAL INSTALLATIONS, according to claim 1, **characterized in that** the detector sensors (3) mounted in the luminaires (2) collect and transmit information to the microprocessor of the control center (1).

6. CONTROL SYSTEM FOR MULTIPLE LUMINAIRE ELECTRICAL INSTALLATIONS, according to claim 1, **characterized in that** the luminaires incorporate LED emitters without delay in the switching on and with multiple light levels.
